# EUROPEAN PATENT SPECIFICATION

(11) **EP 4 393 352 B1**
(45) Date of publication and mention of the grant of the patent: **10.09.2025**
(21) Application number: 23866686.1
(22) Date of filing: 13.06.2023
(51) Int. Cl.: A47J 27/00, A47J 36/02, A47J 37/10

(54) **COOKWARE THAT ACHIEVES NON-STICK EFFECT BY MEANS OF PURE INORGANIC STRUCTURAL LAYER, AND MANUFACTURING METHOD THEREFOR**
KOCHGESCHIRR ZUR ERZIELUNG EINES ANTIHAFTEFFEKTS MITTELS REINER ANORGANISCHER STRUKTURSCHICHT UND HERSTELLUNGSVERFAHREN DAFÜR
USTENSILE DE CUISINE À EFFET ANTIADHÉSIF PAR COUCHE STRUCTURELLE INORGANIQUE PURE, ET SON PROCÉDÉ DE FABRICATION

(30) Priority: 09.11.2022 CN 202211398575; 09.11.2022 CN 202222978121 U
(43) Date of publication of application: 03.07.2024
(73) Proprietor: Zhejiang Sanhe Kitchenware Co., Ltd., Ningbo, Zhejiang 315311 (CN)
(72) Inventor: FANG, Cheng, Ningbo, Zhejiang 315311 (CN); CHENG, Qiang, Ningbo, Zhejiang 315311 (CN)
(74) Representative: Ipside
(86) International application number: PCT/CN2023/099824
(87) International publication number: WO 2024/098743

(56) References cited:
- CN-A- 102 641 078
- CN-A- 110 123 146
- CN-A- 110 757 915
- CN-A- 110 757 915
- CN-A- 112 137 423
- CN-A- 112 137 425
- CN-A- 113 999 555
- CN-A- 113 999 555
- CN-A- 114 642 363
- CN-A- 115 137 215
- CN-A- 115 474 829
- FR-A1- 2 625 494

## Description

### Technical Field

The invention belongs to the field of kitchenware technology, specifically relating to a non-stick cookware and its manufacturing method.

### Background Art

Non-stick cookware, especially non-stick pans, are mainstream products in the current cookware market, mainly achieved by forming a layer of non-stick material on the surface of the cookware body.

In existing technologies, a common non-stick material mainly consists of fluoropolymers such as polytetrafluoroethylene (PTFE), utilizing the non-wettability of fluoropolymers to provide non-stick functionality. However, fluoropolymers decompose at high temperatures (e.g., PTFE above 250°C), damaging the fluoropolymer coating and causing the cookware to lose its non-stick function; moreover, the decomposition of fluoropolymer coatings can produce toxic substances, harming human health.

Another main component of non-stick materials is silicone sol resin, which, similar to fluoropolymer materials, exhibits excellent non-stick performance but has significant limitations in terms of temperature resistance, hardness, durability, and environmental safety, failing to fully meet market and consumer demands.

There are also non-stick cookware made from ceramics and enamel (porcelain enamel), which, although high in aesthetic value, temperature resistance, hardness, durability, and environmental friendliness, inherently lack non-stick properties and perform poorly in both oily and oil-free conditions. Thus, they are generally applied to soup pots, stew pots, and other products but cannot be widely promoted.

Currently, non-stick structures with numerous tiny grooves or capillary pores have been developed on the inner surface of cookware, reducing the contact area between food and the cookware's inner surface during cooking. Meanwhile, the grooves and capillary pores on the cookware's inner surface can absorb grease. During heating and cooking, the grease in the grooves and capillary pores can expand and be released, forming a layer of oil film at the bottom of the cookware, thus creating a "non-stick" effect; after heating stops, the cooking oil cools and is stored in the grooves and capillary pores on the cookware's inner surface. Therefore, cookware with the aforementioned structure can maintain a certain non-stick function for a long time. However, the structure of these small grooves or capillary pores has a significant impact on the non-stick performance of the cookware, requiring specific structures to achieve good non-stick effects, thus imposing high demands on the manufacturing process.

CN 110757915A discloses a composite material, a preparation method thereof, a cooking device and a household electrical appliance. The composite material comprises: a base body; at least one quasicrystal layer which contains quasicrystal particles, wherein at least one quasicrystal layer is sequentially stacked on the outer surface of the base body, and at least a part of the quasicrystal particles in the quasicrystal layer in contact with the outer surface of the base body are embedded in the matrix.

CN 113999555A discloses a composite material and a preparation method thereof, and a non-stick pan. The composite material comprises at least one selected from a first coating structure, a second coating structure and a cluster structure, wherein the first coating structure comprises metal particles with a first particle size and metal-containing compound particles with a second particle size, the outer surfaces of the metal particles are coated with the metal-containing compound particles, and the first particle size is larger than the second particle size; the second coating structure comprises metal-containing compound particles with a third particle size and metal-containing compound particles having a fourth particle size, the outer surfaces of the metal-containing compound particles with the third particle size are coated with the metal-containing compound particles having the fourth particle size, and the third particle size is greater than the fourth particle size; and the cluster structure includes a cluster structure between metal-containing compound particles with a fifth particle size.

### Summary of the Invention

To solve the above technical problems, this invention proposes a cookware according to claim 1 and a manufacturing method according to claim 4 that achieves a non-stick effect through a pure inorganic structure layer.

According to one aspect of this invention, the cookware includes a base material layer and a pure inorganic structure layer. The pure inorganic structure layer is formed by spraying inorganic particles on the inner surface of the base material layer, creating a connected porous structure between the inorganic particles of the pure inorganic structure layer. The inorganic particles sprayed on the inner surface of the base material layer are pure inorganic particles, without adding organic solvents.

The pure inorganic structure layer includes at least three sub-inorganic structure layers. The at least three sub-inorganic structure layers are stacked on the inner surface of the base material layer according to the particle size of the inorganic particles. The sub-inorganic structure layer adjacent to the base material layer has the largest inorganic particle size. As it moves away from the base material layer, the particle size of the multiple sub-inorganic structure layers decreases successively, thereby gradually reducing the porosity of the multiple sub-inorganic structure layers in the direction away from the base material layer.

The three sub-inorganic structure layers are the oil storage layer, slow-release curing layer, and dispersing surface layer. The oil storage layer, slow-release curing layer, and dispersing surface layer are sequentially arranged in the direction away from the base material layer.

The oil storage layer, slow-release curing layer, and dispersing surface layer are sequentially stacked.

The particle size of the inorganic particles in the oil storage layer is 15-60 micrometers, the layer thickness of the oil storage layer is 40-70 micrometers, and the porosity is between 15-25%. The particle size of the inorganic particles in the slow-release curing layer is 1-15 micrometers, the layer thickness of the slow-release curing layer is 20-40 micrometers, and the porosity is between 5-15%. The particle size of the inorganic particles in the dispersing surface layer is 100 nanometers to 1 micrometer, the layer thickness of the dispersing surface layer is 1-20 micrometers.

The weight ratio of ceramic particles in the oil storage layer is not less than 70%; the weight ratio of metal particles in the slow-release curing layer is not less than 60%; the weight ratio of carbon powder in the dispersing surface layer is not less than 50%.

In one embodiment, the particle size of the inorganic particles ranges from 100 nanometers to 60 micrometers. The inorganic particles are applied to the inner surface of the base material layer through plasma spraying, supersonic spraying, cold spraying, laser cladding, or air spraying. The thickness of the pure inorganic structure layer is between 61 and 130 micrometers.

In one embodiment, the inorganic particle materials can be metal particles, ceramic particles, or carbon powder. The metal particles can be one or more of titanium, titanium alloy, zirconium, zirconium alloy, stainless steel, low carbon steel, high carbon steel, and zinc. The ceramic particles can be one or more of zirconia, zirconium nitride, titanium oxide, titanium nitride, titanium carbide, aluminum oxide, magnesium oxide, triiron tetraoxide, diiron trioxide, boron nitride, calcium oxide, silicon oxide, and silicon nitride. The carbon powder can be one or more of natural graphite, polycrystalline graphite, pyrolytic graphite, highly oriented pyrolytic graphite, and carbon quantum dots.

According to another aspect of this invention, the manufacturing method of claim 4 of the cookware according to claim 1 includes the following steps:
Forming a metal base material through stretching or die-casting, then deburring, and performing surface grinding and cleaning treatment to form a base material layer with a thickness of not less than 1 millimeter; Forming a pure inorganic structure layer by spraying inorganic particles onto the inner surface of the base material layer through cold spraying, plasma spraying, supersonic spraying, laser cladding, or air spraying.

The beneficial effects of this invention: The cookware with a pure inorganic structure layer of this invention includes at least three sub-inorganic structure layers. The at least three sub-inorganic structure layers are stacked on the inner surface of the base material layer according to the particle size of the inorganic particles. As it moves away from the base material layer, the particle size of the multiple sub-inorganic structure layers decreases successively, thereby gradually reducing the porosity of the multiple sub-inorganic structure layers in the direction away from the base material layer. This results in the pure inorganic structure layer having high bonding strength and toughness, high surface hardness, scratch and wear resistance, and features oil absorption, oil storage, and self-lubrication on its surface. Upon heating, the pores can perform micro-pore heating breathing, thus achieving a non-stick and easy-to-clean effect.

### Brief Description of the Drawings

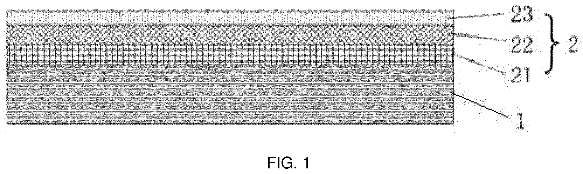

Figure 1 is a cross-sectional view of the container wall of the cookware with a pure inorganic structure layer proposed in an embodiment of this invention.

### Detailed Description of Embodiments

To make the objectives, technical solutions, and advantages of this invention clearer, the following further details this invention with specific embodiments and refers to the drawings. However, those skilled in the art should understand that this invention is not limited to the drawings and the following embodiments, but by the appended set of claims.

An embodiment of this invention proposes a cookware that achieves a non-stick effect through a pure inorganic structure layer. The cookware includes a base material layer 1 and a pure inorganic structure layer 2. The pure inorganic structure layer 2 is formed by spraying inorganic particles on the inner surface of the base material layer 1, creating a connected porous structure between the inorganic particles of the pure inorganic structure layer 2. The inorganic particles sprayed on the inner surface of the base material layer are pure inorganic particles, without adding organic solvents. The pure inorganic structure layer 2 includes at least three sub-inorganic structure layers. The at least three sub-inorganic structure layers are stacked on the inner surface of the base material layer 1 according to the particle size of the inorganic particles. The sub-inorganic structure layer adjacent to the base material layer 1 has the largest inorganic particle size. As it moves away from the base material layer 1, the particle size of the multiple sub-inorganic structure layers decreases successively.

Specifically, as shown in Figure 1, which shows a cross-sectional view of the cookware's container wall. In Figure 1, the cookware, preferably a frying pan based on usage conditions and effects, includes a base material layer 1 and a pure inorganic structure layer 2.

The base material layer 1 serves as the body of the cookware, typically made of metal materials such as aluminum alloy, stainless steel, or iron, with a thickness usually not less than 1mm.

The pure inorganic structure layer 2 of the embodiment of this invention is formed by spraying inorganic particle materials on the inner surface of the base material layer 1. The particle size of the inorganic particles ranges from 100 nanometers to 60 micrometers. The spraying can be achieved through plasma spraying, supersonic spraying, cold spraying, laser cladding, and air spraying methods, with the thickness of the pure inorganic structure layer 2 between 61 and 130 micrometers.

The inorganic particle materials can be metal particles, ceramic particles, or carbon powder. Metal particles can be one or more of titanium, titanium alloy, zirconium, zirconium alloy, stainless steel, low carbon steel, high carbon steel, and zinc. Ceramic particles can be one or more of zirconia, zirconium nitride, titanium oxide, titanium nitride, titanium carbide, aluminum oxide, magnesium oxide, triiron tetraoxide, diiron trioxide, boron nitride, calcium oxide, silicon oxide, and silicon nitride. Carbon powder can be one or more of natural graphite, polycrystalline graphite, pyrolytic graphite, highly oriented pyrolytic graphite, and carbon quantum dots. Since the spraying process is used, the inorganic particles of the pure inorganic structure layer 2 will not be closely attached to each other, and a porous structure will be formed between the inorganic particles.

The pure inorganic structure layer 2 includes at least three sub-inorganic structure layers stacked according to the particle size of the inorganic particles. The sub-inorganic structure layer adjacent to the base material layer 1 has the largest inorganic particle size. As it moves away from the base material layer 1, the particle size of the multiple sub-inorganic structure layers decreases successively.

According to the present invention, the three sub-inorganic structure layers are the sequentially stacked oil storage layer 21, slow-release curing layer 22, and dispersing surface layer 23. The particle size of the inorganic particles in the oil storage layer 21 is 15-60 micrometers, and the inorganic particles can be one or more of the aforementioned metal particles, ceramic particles, or carbon powder. The layer thickness of the oil storage layer 21 is 40-70 micrometers, with a porosity between 15-25%. The particle size of the inorganic particles in the slow-release curing layer 22 is 1-15 micrometers, and the inorganic particles can be one or more of the aforementioned metal particles, ceramic particles, or carbon powder. The layer thickness of the slow-release curing layer 22 is 20-40 micrometers, with a porosity between 5-15%. The particle size of the inorganic particles in the dispersing surface layer 23 is 100 nanometers to 1 micrometer, and the inorganic particles can be one or more of the aforementioned metal particles, ceramic particles, or carbon powder. The layer thickness of the dispersing surface layer 23 is 1-20 micrometers. The "dispersing" surface layer refers to the inorganic particles not fully covering the slow-release curing layer 22. For example, the inorganic particles can form a uniform coverage over the slow-release curing layer 22 as independent particles and/or form multiple sub-area layers with a cracked pattern evenly distributed on the slow-release curing layer 22. Thus, the dispersing surface layer 23 does not completely seal the slow-release curing layer 22. At the same time, the surface of the dispersing surface layer 23 presents a rough, sandblasted state.

Due to the three sub-inorganic structure layers-oil storage layer 21, slow-release curing layer 22, and dispersing surface layer 23, where the oil storage layer 21 has the largest inorganic particle size, followed by the slow-release curing layer 22, and the dispersing surface layer 23 has the smallest inorganic particle size, the porosity formed between the inorganic particles in the oil storage layer 21 is also the largest, followed by the slow-release curing layer 22, and the dispersing surface layer 23 has the smallest porosity.

Moreover, according to the present invention, the inorganic particle size of the dispersing surface layer 23 ranges from 100 nanometers to 1 micrometer, significantly smaller than the oil storage layer 21's inorganic particle size of 15-60 micrometers and the slow-release curing layer 22's inorganic particle size of 1-15 micrometers. Therefore, the oil storage layer 21 has relatively large pores for oil storage, while the dispersing surface layer 23 has small, dense, and uniform pores, which on one hand, can enhance the hardness of the dispersing surface layer 23, and on the other hand, facilitate the uniform penetration or release of oil. Additionally, by setting the slow-release curing layer 22 with a median inorganic particle size between the oil storage layer 21 and the dispersing surface layer 23, this layer acts as a transition layer with a coating solidification function, effectively bonding the oil storage layer 21 and the dispersing surface layer 23, improving the bonding strength and toughness of the pure inorganic structure layer 2, and also assisting in oil storage. Meanwhile, as the cookware begins to heat up, with the temperature of the cookware rising, the oil and gas mixture needs to fill the slow-release curing layer 22 before being released from the dispersing surface layer 23, thus estimating the heating degree of the cookware based on the amount of oil released from the cookware bottom.

According to the present invention, the main component of the oil storage layer 21 is ceramic particles, with a weight ratio of ceramic particles not less than 70%; the main component of the slow-release curing layer 22 is metal particles, with a weight ratio of metal particles not less than 60%; the main component of the dispersing surface layer 23 is carbon powder, with a weight ratio of carbon powder not less than 50%. Thus, the bottom layer, the oil storage layer, mainly consists of ceramic particles forming a ceramic layer, which primarily achieves structural stability, high strength, and high hardness with a porous layer; the second layer, the slow-release layer, mainly consists of metal particles forming a composite metal layer, which can improve the toughness of the bottom ceramic layer and optimize the pore structure, increasing pore density and reducing pore size, enhancing the stability of oil storage, and giving the surface a strong metallic feel; the third layer, the surface layer, mainly consists of carbonaceous materials, thus obtaining a self-lubricating functional layer with a self-lubricating effect, resulting in a lower surface friction coefficient of the dispersing surface layer 23, and an even lower dynamic friction coefficient in the presence of oil, making the surface of the pure inorganic structure layer 2 easy to clean and physically non-stick.

Through material accumulation, the pure inorganic structure layer 2 has a three-dimensional structure with inherent voids for oil storage, and the surface of the pure inorganic structure layer 2 will also form a rough structure, which can partially elevate the food, and in the pores between the food and the surface, the heated oil will micro-boil and produce a large amount of hot steam, further lifting the food, achieving a certain physical non-stick effect.

Below, a non-stick pan is used as an example to illustrate this invention.

During the cooking process, the non-stick pan is heated, and the pores/micropores in the pure inorganic structure layer 2 expand due to heat, thus having a strong adsorption force for oil. After adding oil to the non-stick pan, the oil fully wets and fills the micropores; upon further heating, the oil in the pores will micro-boil and produce hot gas, thus during the cooking process, the micro-boiling oil and hot gas are located between the food and the pure inorganic structure layer 2, lifting the food and achieving separation between the food and the pure inorganic structure layer 2. After cooking is completed, as the food takes away the oil and the temperature of the non-stick pan body decreases, the temperature of the oil in the pores of the pure inorganic structure layer 2 also decreases, the volume contracts, and oil residue remains. Even after surface cleaning of the non-stick pan, the pores of the pure inorganic structure layer 2, especially the pores of the oil storage layer 21, will still retain a certain amount of oil, which will be released upon reheating, maintaining an oily state at the bottom of the pan. Therefore, the working principle of the non-stick pan in this embodiment is that, with continuous heating of the non-stick pan, the oil in the pores of the pure inorganic structure layer 2 maintains a boiling state and produces a large amount of hot steam, which can semi-suspend the food being cooked at the bottom of the non-stick pan, thus achieving the "non-stick" technical effect. It should be noted that for the non-stick pan in this embodiment, if it is boiled in hot water for cleaning after cooking, the oil residue in the micropores can be displaced, thoroughly cleaning the non-stick pan.

This embodiment only shows three sequentially stacked sub-inorganic structure layers, but those skilled in the art can understand that between the oil storage layer 21 and the dispersing surface layer 23, one or more slow-release curing layers with different inorganic particle sizes can be included to further improve the bonding strength and toughness of the pure inorganic structure layer 2.

Another embodiment of this invention provides a manufacturing method for the cookware described above, including the following steps:
S1: Forming the base material layer.

A metal base material such as aluminum alloy, stainless steel, or iron is formed through stretching or die-casting, then deburred, and undergoes surface grinding and cleaning treatment to form a base material layer 1 with a thickness of not less than 1mm.

S2: Spraying on the base material layer 1 to form a pure inorganic structure layer 2.

Inorganic particles are coated on the inner side surface of the base material layer 1 through cold spraying, plasma spraying, supersonic spraying, laser cladding, or air spraying methods to form a pure inorganic structure layer 2. It should be noted that laser cladding mentioned here is a type of thermal spraying.

**In** a preferred embodiment of this invention, the base material is preheated to 80-120 degrees, and inorganic particles with a main component of ceramic particles (not less than 70% by weight) are sprayed onto the inner side surface of the base material layer 1 through plasma spraying or supersonic spraying to form an oil storage layer 21. Preferably, using plasma spraying as an example, under 55-65V voltage and 500-600A current conditions, the inorganic particle powder delivery rate is adjusted to 4-8mg/s, using a hydrogen flow rate of 4-8L/m to spray inorganic particles on the inner side surface of the base material layer 1, with a spraying distance of 10-15mm, forming a coating layer with a thickness of 40-70 micrometers and a porosity of 15-25% for a 30cm frying pan, requiring 50-90s of spraying. This layer serves as a basic coating layer, ensuring the hardness and strength of the pure inorganic structure layer 2, and building a basic void layer with a thickness of 40-70 micrometers.

Subsequently, cold spraying and supersonic spraying processes are used to spray inorganic particles with a main component of metal particles (not less than 60% by weight) onto the outer surface of the oil storage layer 21 to form a slow-release curing layer 22. Preferably, using cold spraying as an example, using nitrogen gas at a temperature between 200-400 degrees as the spraying gas, controlling the spraying pressure at 2.0-3.5MPa, and controlling the gas flow speed at 500-900m/s, metal particle powder is fed axially into the gas to form a gas-solid two-phase flow, spraying at a distance of 10-25mm from the outer surface of the oil storage layer 21 to form a coating layer with a thickness of 2-40 micrometers and a porosity of 5-15% for a 30cm frying pan, requiring 30-60s of spraying. During the spraying process, the oil storage layer 21 can be appropriately filled, re-accumulated, and surface-modified, forming a finer micro-nano morphology with more and finer voids.

Finally, laser cladding or spraying processes are used to spray inorganic particles with a main component of carbon powder (not less than 50% by weight) onto the outer surface of the slow-release curing layer 22 to form a dispersing surface layer 23. Preferably, using the spraying process as an example, under a pressure of 0.4-0.6MPa, at a distance of 10-25mm from the outer surface of the slow-release curing layer 22, carbon powder resin is sprayed, followed by sintering and solidification at a temperature of 330°C for 8-12 minutes, forming a dispersing surface layer 23 with a thickness of 1-20 micrometers and a self-lubricating function on the surface of the slow-release curing layer 22, with the surface of the dispersing surface layer 23 presenting a rough, sandblasted state.

A non-stick pan according to an embodiment of this invention is manufactured using the method described above. The material of the base material layer is stainless steel, with a thickness of 1.2mm. The pure inorganic structure layer consists of three sub-inorganic structure layers-the oil storage layer 21, slow-release curing layer 22, and dispersing surface layer 23. The oil storage layer 21 includes 72% by weight of ceramic particles, with an inorganic particle size of 35 micrometers, a layer thickness of 60 micrometers, and a porosity of 20%. The slow-release curing layer 22 includes 64% by weight of metal particles, with an inorganic particle size of 10 micrometers, a layer thickness of 30 micrometers, and a porosity of 15%. The dispersing surface layer 23 includes 50% by weight of carbon powder, with an inorganic particle size of 300 nanometers, and a layer thickness of 5 micrometers.

Physical index testing:
1. Hardness, pencil hardness reaches 9H or above, no scratches when scratched with a steak knife, and no scratches caused by an iron spatula and steel wool.
2. High-temperature resistance, placed in a 500-degree oven, continuously heated for 1 hour, no surface cracking, discoloration, or weight loss.
3. Cold and hot shock, the workpiece is heated to 400 degrees then placed in 20-degree water, continuously shocked 50 times, observing no surface cracking, discoloration, or changes.
4. Non-stick testing methods:
   1. Frying eggs.

After standard pot opening and cleaning, heat the pan to 150 degrees, spray oil three times with an oil sprayer, about 5g of oil, then heat to 160 degrees and crack an egg into the pan, observing non-stick, without adding more oil, continuously frying eggs, this product can continuously fry 6 eggs under subsequent no-oil conditions and under continuous heating conditions without sticking.

### 2. Stir-frying shredded meat (two methods)

Hot pan cool oil: Heat the pan to 200 degrees, add oil, immediately add marinated shredded meat after adding oil, stir-fry and observe non-stick;

Hot pan hot oil: Heat the pan to 200 degrees, add oil, wait for the oil to heat up slightly until it starts to smoke, then add marinated shredded meat, stir-fry and observe non-stick.

**In** the description of this specification, references to terms such as "an embodiment", "some embodiments", "example", "specific example", or "some examples" etc., indicate that a specific feature, structure, material, or characteristic described in connection with the embodiment or example is included in at least one embodiment or example of the invention. In this specification, schematic representations of the terms mentioned above do not necessarily refer to the same embodiment or example. Moreover, the described specific features, structures, materials, or characteristics may be combined in any suitable manner in one or more embodiments or examples within the scope of the present invention as defined in the appended claims.

## Claims

1. A cookware, which realizes a non-stick effect through a pure inorganic structure layer, the cookware comprising a base material layer (1) and a pure inorganic structure layer (2), wherein the pure inorganic structure layer (2) is formed by spraying inorganic particles on the inner surface of the base material layer (1), and the inorganic particles within the pure inorganic structure layer (2) form a connected porous structure,
the pure inorganic structure layer (2) includes at least three sub-inorganic structure layers, these at least three sub-inorganic structure layers are stacked on the inner surface of the base material layer (1) in order of the size of the inorganic particle diameters, where the sub-inorganic structure layer adjacent to the base material layer (1) has the largest inorganic particle diameter, and as it moves away from the base material layer (1), the diameters of the inorganic particles in multiple sub-inorganic structure layers successively decrease, thereby the pores in the multiple sub-inorganic structure layers successively decrease in size in the direction moving away from the base material layer (1);
the three sub-inorganic structure layers are an oil storage layer (21), a slow-release curing layer (22), and a dispersing surface layer (23), which are set in sequence in the direction moving away from the base material layer (1);
the oil storage layer (21), the slow-release curing layer (22), and the dispersing surface layer (23) are stacked in sequence;
**characterized in that**
the inorganic particle diameter of the oil storage layer (21) is between 15 and 60 micrometers, the thickness of the oil storage layer (21) is between 40 and 70 micrometers, with a porosity between 15% and 25%; the inorganic particle diameter of the slow-release curing layer (22) is between 1 and 15 micrometers, the thickness of the slow-release curing layer (22) is between 20 and 40 micrometers, with a porosity between 5% and 15%; the inorganic particle diameter of the dispersing surface layer (23) is between 100 nanometers and 1 micrometer, the thickness of the dispersing surface layer (23) is between 1 and 20 micrometers; and
the weight ratio of ceramic particles in the oil storage layer (21) is not less than 70%; the weight ratio of metal particles in the slow-release curing layer (22) is not less than 60%; the weight ratio of carbon powder in the dispersing surface layer (23) is not less than 50%.

2. The cookware according to claim 1, **characterized in that** the diameter of the inorganic particles is between 100 nanometers and 60 micrometers, and the inorganic particles are sprayed onto the inner surface of the base material layer (1) by plasma spraying, supersonic spraying, cold spraying, laser cladding, or air spraying; the thickness of the pure inorganic structure layer (2) is between 61 and 130 micrometers.

3. The cookware according to claim 1, **characterized in that** the inorganic particle materials can be metal particles, ceramic particles, or carbon powder, wherein the metal particles can be one or more of titanium, titanium alloy, zirconium, zirconium alloy, stainless steel, low carbon steel, high carbon steel, and zinc; the ceramic particles can be one or more of zirconia, zirconium nitride, titanium oxide, titanium nitride, titanium carbide, aluminum oxide, magnesium oxide, triiron tetraoxide, diiron trioxide, boron nitride, calcium oxide, silicon dioxide, and silicon nitride; the carbon powder can be one or more of natural graphite, polycrystalline graphite, pyrolytic graphite, highly oriented pyrolytic graphite, and carbon quantum dots.

4. A method for manufacturing the cookware according to any one of claims 1-3, **characterized in that** the manufacturing method includes the following steps:
forming a metal base material by stretching or die casting, then deburring, and performing surface grinding and cleaning treatment to form a base material layer (1) with a thickness not less than 1 millimeter;
forming a pure inorganic structure layer (2) by spraying inorganic particles onto the inner surface of the base material layer (1) through cold spraying, plasma spraying, supersonic spraying, laser cladding, or air spraying.

## Patentansprüche

1. Kochgeschirr, das durch eine reine anorganische Strukturschicht einen Antihafteffekt realisiert, wobei das Kochgeschirr eine Basismaterialschicht (1) und eine reine anorganische Strukturschicht (2) umfasst, wobei die reine anorganische Strukturschicht (2) durch Aufsprühen anorganischer Partikel auf die Innenfläche der Basismaterialschicht (1) gebildet wird, und die anorganischen Partikel innerhalb der reinen anorganischen Strukturschicht (2) eine verbundene poröse Struktur bilden, wobei die reine anorganische Strukturschicht (2) mindestens drei subanorganische Strukturschichten umfasst, diese mindestens drei subanorganischen Strukturschichten auf der Innenfläche der Basismaterialschicht (1) in der Reihenfolge der Größe der anorganischen Partikeldurchmesser gestapelt sind, wobei die an die Basismaterialschicht (1) angrenzende subanorganische Strukturschicht den größten anorganischen Partikeldurchmesser aufweist, und wenn sie sich von der Basismaterialschicht (1) wegbewegt, die Durchmesser der anorganischen Partikel in multiplen subanorganischen Strukturschichten sukzessive abnehmen, wodurch sich die Poren in den multiplen subanorganischen Strukturschichten sukzessive in der sich von der Basismaterialschicht (1) wegbewegenden Richtung in der Größe verringern;
wobei die drei subanorganischen Strukturschichten eine Ölspeicherschicht (21), eine langsam aushärtende Schicht (22) und eine dispergierende Oberflächenschicht (23) sind, die nacheinander in der von der Basismaterialschicht (1) weggehenden Richtung angeordnet sind;
wobei die Ölspeicherschicht (21), die langsam ablösende Aushärtungsschicht (22) und die dispergierende Oberflächenschicht (23) nacheinander gestapelt sind; **dadurch gekennzeichnet, dass**
der anorganische Partikeldurchmesser der Ölspeicherschicht (21) zwischen 15 und 60 Mikrometer liegt, die Dicke der Ölspeicherschicht (21) zwischen 40 und 70 Mikrometer liegt, mit einer Porosität zwischen 15 % und 25 %; der anorganische Partikeldurchmesser der langsam aushärtenden Schicht (22) zwischen 1 und 15 Mikrometer liegt, die Dicke der langsam aushärtenden Schicht (22) zwischen 20 und 40 Mikrometer liegt, mit einer Porosität zwischen 5 % und 15 %; der anorganische Partikeldurchmesser der dispergierenden Oberflächenschicht (23) zwischen 100 Nanometer und 1 Mikrometer liegt, die Dicke der dispergierenden Oberflächenschicht (23) zwischen 1 und 20 Mikrometer liegt; und
das Gewichtsverhältnis von Keramikpartikeln in der Ölspeicherschicht (21) nicht weniger als 70 % beträgt; das Gewichtsverhältnis von Metallpartikeln in der langsam aushärtenden Schicht (22) nicht weniger als 60 % beträgt; das Gewichtsverhältnis von Kohlenstoffpulver in der dispergierenden Oberflächenschicht (23) nicht weniger als 50 % beträgt.

2. Kochgeschirr nach Anspruch 1, **dadurch gekennzeichnet, dass** der Durchmesser der anorganischen Partikel zwischen 100 Nanometer und 60 Mikrometer beträgt und die anorganischen Partikel durch Plasmaspritzen, Überschallspritzen, Kaltspritzen, Laserbeschichten oder Luftspritzen auf die Innenfläche der Basismaterialschicht (1) aufgesprüht werden; die Dicke der reinen anorganischen Strukturschicht (2) beträgt zwischen 61 und 130 Mikrometer.

3. Kochgeschirr nach Anspruch 1, **dadurch gekennzeichnet, dass** die anorganischen Partikelmaterialien Metallpartikel, Keramikpartikel oder Kohlenstoffpulver sein können, wobei die Metallpartikel ein oder mehrere aus Titan, Titanlegierung, Zirkonium, Zirkoniumlegierung, Edelstahl, kohlenstoffarmem Stahl, kohlenstoffreichem Stahl und Zink sein können; die Keramikpartikel ein oder mehrere aus Zirkonium, Zirkoniumnitrid, Titanoxid, Titannitrid, Titancarbid, Aluminiumoxid, Magnesiumoxid, Tri-Eisentetraoxid, Di-Eisentrioxid, Bornitrid, Calciumoxid, Siliziumdioxid, und Siliziumnitrid sein können; das Kohlenstoffpulver ein oder mehrere aus natürlichem Graphit, polykristallinem Graphit, pyrolytischem Graphit, hochorientiertem pyrolytischem Graphit und Kohlenstoffquantenpunkten sein kann.

4. Verfahren zur Herstellung des Kochgeschirrs nach einem der Ansprüche 1 bis 3, **dadurch gekennzeichnet, dass** das Herstellungsverfahren die folgenden Schritte umfasst:
Bilden eines Metallgrundmaterials durch Dehnen oder Druckguss, anschließendes Entgraten und Durchführen einer Oberflächenschleif- und Reinigungsbehandlung zur Bildung einer Grundmaterialschicht (1) mit einer Dicke von mindestens 1 Millimeter;
Bilden einer reinen anorganischen Strukturschicht (2) durch Aufsprühen anorganischer Partikel auf die Innenfläche der Basismaterialschicht (1) durch Kaltspritzen, Plasmaspritzen, Überschallspritzen, Laserbeschichten oder Luftspritzen.

## Revendications

1. Ustensile de cuisine, qui réalise un effet antiadhésif à travers une couche de structure inorganique pure, l'ustensile de cuisine comportant une couche de matériau de base (1) et une couche de structure inorganique pure (2), dans lequel la couche de structure inorganique pure (2) est formée par pulvérisation de particules inorganiques sur la surface interne de la couche de matériau de base (1), et les particules inorganiques à l'intérieur de la couche de structure inorganique pure (2) forment une structure poreuse connectée,
la couche de structure inorganique pure (2) inclut au moins trois couches de structure sous-inorganique, ces au moins trois couches de structure sous-inorganique sont empilées sur la surface interne de la couche de matériau de base (1) par ordre de taille des diamètres de particules inorganiques, où la couche de structure sous-inorganique adjacente à la couche de matériau de base (1) présente le plus grand diamètre de particule inorganique, et à mesure qu'elle s'éloigne de la couche de matériau de base (1), les diamètres des particules inorganiques dans de multiples couches de structure sous-inorganique diminuent successivement, de cette façon les pores dans les multiples couches de structure sous-inorganique diminuent successivement en taille dans la direction s'éloignant de la couche de matériau de base (1) ;
les trois couches de structure sous-inorganique sont une couche de stockage d'huile (21), une couche de durcissement à libération lente (22) et une couche de surface dispersante (23), qui sont disposées en séquence dans la direction s'éloignant de la couche de matériau de base (1) ;
la couche de stockage d'huile (21), la couche de durcissement à libération lente (22) et la couche de surface de dispersion (23) sont empilées l'une après l'autre ;
**caractérisé en ce que**
le diamètre de particule inorganique de la couche de stockage d'huile (21) est compris entre 15 et 60 micromètres, l'épaisseur de la couche de stockage d'huile (21) est comprise entre 40 et 70 micromètres, avec une porosité comprise entre 15 % et 25 % ; le diamètre de particule inorganique de la couche de durcissement à libération lente (22) est compris entre 1 et 15 micromètres, l'épaisseur de la couche de durcissement à libération lente (22) est comprise entre 20 et 40 micromètres, avec une porosité comprise entre 5 % et 15 % ; le diamètre de particule inorganique de la couche de surface dispersante (23) est compris entre 100 nanomètres et 1 micromètre, l'épaisseur de la couche de surface dispersante (23) est comprise entre 1 et 20 micromètres ; et
le rapport pondéral de particules céramiques dans la couche de stockage d'huile (21) n'est pas inférieur à 70 % ; le rapport pondéral de particules métalliques dans la couche de durcissement à libération lente (22) n'est pas inférieur à 60 % ; le rapport pondéral de poudre de carbone dans la couche de surface dispersante (23) n'est pas inférieur à 50 %.

2. Ustensile de cuisine selon la revendication 1, **caractérisé en ce que** le diamètre des particules inorganiques est compris entre 100 nanomètres et 60 micromètres, et les particules inorganiques sont pulvérisées sur la surface interne de la couche de matériau de base (1) par pulvérisation plasma, pulvérisation supersonique, pulvérisation à froid, revêtement laser ou pulvérisation à l'air ; l'épaisseur de la couche de structure inorganique pure (2) est comprise entre 61 et 130 micromètres.

3. Ustensile de cuisine selon la revendication 1, **caractérisé en ce que** les matériaux particulaires inorganiques peuvent être des particules métalliques, des particules céramiques ou de la poudre de carbone, dans lequel les particules métalliques peuvent être un ou plusieurs parmi le titane, l'alliage de titane, le zirconium, l'alliage de zirconium, l'acier inoxydable, l'acier à faible teneur en carbone, l'acier à haute teneur en carbone et zinc ; les particules céramiques peuvent être un ou plusieurs parmi le zirconium, le nitrure de zirconium, l'oxyde de titane, le nitrure de titane, le carbure de titane, l'oxyde d'aluminium, l'oxyde de magnésium, le tétraoxyde de trifer, le trioxyde de difer, le nitrure de bore, l'oxyde de calcium, le dioxyde de silicium, et le nitrure de silicium ; la poudre de carbone peut être un ou plusieurs parmi le graphite naturel, le graphite polycristallin, le graphite pyrolytique, le graphite pyrolytique hautement orienté, et les points quantiques de carbone.

4. Procédé de fabrication de l'ustensile de cuisine selon l'une quelconque des revendications 1-3, **caractérisé en ce que** le procédé de fabrication comporte les étapes suivantes :
la formation d'un matériau de base métallique par étirement ou moulage sous pression, puis ébavurage, et la réalisation d'un polissage de surface et d'un traitement de nettoyage pour former une couche de matériau de base (1) avec une épaisseur non inférieure à 1 millimètre ;
la formation d'une couche de structure inorganique pure (2) par pulvérisation de particules inorganiques sur la surface interne de la couche de matériau de base (1) par pulvérisation à froid, pulvérisation plasma, pulvérisation supersonique, revêtement laser ou pulvérisation à l'air.
